(19) Europäisches Patentamt
European Patent Office
Office européen des brevets

(11) Publication number: **0 434 130 A2**

(12) **EUROPEAN PATENT APPLICATION**

(21) Application number: **90203278.8**

(22) Date of filing: **12.12.90**

(51) Int. Cl.5: **C07C 407/00**, C08F 4/32, C08F 14/06

(30) Priority: **21.12.89 IT 2279489**

(43) Date of publication of application: **26.06.91 Bulletin 91/26**

(84) Designated Contracting States: **AT BE CH DE DK ES FR GB GR LI LU NL SE**

(71) Applicant: **ENICHEM SYNTHESIS S.p.A.**
**Via Ruggero Settimo 55**
**I-90139 Palermo(IT)**

(72) Inventor: **Villanti, Alberto**
**Viale delle Rimembranze di Lambrate 9**
**I-20134 Milan(IT)**
Inventor: **Caredda, Carlo**
**Via Manzoni 12**
**I-20059 Vimercate-Milan(IT)**
Inventor: **Messori, Vittorio**
**Via Archimede 105**
**I-20129 Milan(IT)**

(74) Representative: **Roggero, Sergio et al**
**Ing. Barzanò & Zanardo Milano S.p.A. Via Borgonuovo 10**
**I-20121 Milano(IT)**

(54) **Stable aqueous emulsions of liquid organic peroxides and process for producing such emulsions.**

(57) A stable aqueous emulsion of a liquid organic peroxide is obtained by means of a process which comprises:
adding to water a dispersant belonging to the class of cellulose ethers and esters and stirring the so obtained mass until a homogeneous aqueous dispersion is obtained;
adding to said homogeneous aqueous dispersion an organic peroxide which is liquid under the operating conditions, and is insoluble or poorly soluble in water, and stirring the resulting mixture until a stable aqueous emulsion is obtained.

The organic peroxide preferably is tert.-butyl peroxy pivalate and its stable aqueous emulsion is useful as a polymerization initiator, in particular in the preparation of poly(vinyl chloride) by means of the polymerization of vinyl chloride in aqueous suspension or emulsion.

EP 0 434 130 A2

# "STABLE AQUEOUS EMULSIONS OF LIQUID ORGANIC PEROXIDES AND PROCESS FOR PRODUCING SUCH EMULSIONS"

The present invention relates to stable aqueous emulsions of liquid organic peroxides and to the process for preparing them.

Organic peroxides are used in the art in particular as polymerization initiators in the polymerization of such unsaturated monomers as ethylene, vinyl chloride, vinylidene chloride, vinyl acetate, acrylonitrile and (meth)acrylate esters.

A drawback which may occur un connection with the use of peroxides consists in their lack of heat stability. For instance, tert.-butyl peroxy pivalate, usually employed in vinyl chloride polymerization, is thermally unstable at room temperature, such that, when kept under adiabatic conditions in an environment at 20° C, after about 96 hours it undergoes an explosive thermal decomposition. Due to this reason, tert.-butyl peroxy pivalate is stored at temperatures lower than 5° C and its commercial formulations are generally constituted by oil-like solutions at 75% by weight in inert hydrocarbons or mineral oils which, by diluting it, stabilize it. Summing-up, the thermochemical characteristics of tert.-butyl peroxy pivalate, as well as of other peroxides known in the art, require that very stringent precautions and controls are adopted in order to make it possible them to be safely used.

By virtue of its high specific heat, water can represent an excellent stabilizer agent whenever it is compatible with a product dissolved or dispersed in it. Unfortunately, in the case of tert.-butyl peroxy pivalate, as well as other peroxides, the use of water is hindered by the immiscibility, or poor miscibility, of same water with the peroxide, either as a pure product, or in the form of its usual oil-like formulations available from the market.

Therefore, a demand exists for aqueous compositions which contain substantial amounts of peroxide, and are stable enough over time, in order that a much safer use of peroxide is achieved in all of those industrial applications in which the presence of water can be allowed, such as, e.g., in the processes of vinyl chloride polymerization in aqueous polymerization emulsions or suspensions.

The present Applicant has found now that the liquid peroxides which are insoluble, or scarcely soluble in water, can be transformed into stable, fluid and highly safe emulsions if special dispersants are used, with the problems which affect the prior art, as above briefly mentioned, being overcome.

In accordance therewith, according to a first aspect thereof, the present invention relates to a process for preparing a stable aqueous emulsion of a liquid organic peroxide, which process is characterized in that it comprises:

adding to water an amount comprised within the range of from 0.01 to 5% by weight, with reference to the weight of water, of a dispersant belonging to the class of cellulose ethers and cellulose esters and stirring the so obtained mass at a temperature comprised within the range of from 10° C to 90° C, until a homogeneous aqueous dispersion is obtained;

adding to said homogeneous aqueous dispersion an organic peroxide which is liquid under the operating conditions, and is insoluble or poorly soluble in water, with a weight ratio of the organic peroxide to the aqueous dispersion comprised within the range of from 1:9 to 9:1, and stirring the so obtained mass at a temperature comprised within the range of from 0° C to 30° C, until a stable aqueous emulsion of peroxide is obtained.

The process according to the present invention can be applied to any organic peroxides which are liquid under room conditions, and insoluble or poorly soluble in water. In the preferred form of practical embodiment, such a process is applied to liquid peresters and in particular to tert.-butyl peroxy pivalate, either as a pure compound, or as solution in an inert vehicle, such as, e.g., the oil-like formulations available from the market, which are essentially constituted by solutions at about 75% by weight of tert.-butyk peroxy pivalate in hydrocarbons or mineral oils.

In this case, emulsions are obtained, which are particularly useful for use as initiators of polymerization of unsaturated organic monomers and in particular in the processes of polymerization of vinyl chloride monomer carried out in an aqueous suspension or emulsion.

The dispersants useful for the purposes of the present invention are cellulose ethers and esters, such as, e.g., methyl-cellulose, ethyl-cellulose, carboxy-methyl-cellulose and carboxy-ethyl-cellulose. The preferred dispersants are the methyl ethers of cellulose the hydroxy groups of which are methoxylated to an extent of from 10 to 50%, and having such a polymerization degreee that their aqueous solutions at 2% by weight have a viscosity comprised within the range of from 10 to 6,000 mPas.

In the preferred form of practical embodiment, a homogeneous aqueous dispersion is prepared with an amount of dispersant which is comprised within the range of from 0.1 to 1% by weight, relatively to the

weight of water, and by operating at temperatures of the order of 40° C. Furthermore, in the preparation of the aqueous emulsion of the organic peroxide, the process is preferably carried out at a temperature of the order of 5° C, with a weight ratio of the organic peroxide to the aqueous dispersion comprised within the range of from 1:4 to 2:1. The necessary times for a stable suspension to be obtained are comprised within the range of from 10 minutes to 3 hours, and typically are of the order of the order of 1 hour.

By operating in the above outlined way, aqueous emulsions of organic peroxide are obtained, which are stable to phase separation for a time of at least 24 hours and with their stability time being as long as 260 hours when the suspensions are stored at the temperature of 5° C. These emulsions are furthermore fluid enough (with their viscosity values typically being of the order of from 200 to 600 mPas) for them to be easily handled; and with their thermal stability being higher than of peroxide as such, or of peroxide in its commercial formulations, so that said emulsions can be handled with a good safety.

In particular, in the experimental examples reported in the following, the stability of the emulsions to phase separation is determined as follows.

100 ml of emulsion is charged to a graduated cylinder of 100 ml of capacity, which is then stored inside a refrigerated cabinet at 5° C. At "t" time, the minimum amount of emulsion necessary for a iodometric titration of active oxygen is drawn by means of a graduated pipette. The samples are always drawn at a same distance from the free surface of the aqueous mass (approximately 2 cm). The % phase separation S%, expressed as the ratio of the phase separation at "t" time and the complete phase separation, is computed according to the expression (I):

$$S\% = \frac{Ct - Co}{Cs - Cm} \qquad (I)$$

wherein:

Ct = concentration of active oxygen in the sample drawn at "t" time;
Co = concentration of active oxygen in the sample drawn at zero time;
Cs = concentration of active oxygen in the peroxide as a pure compound, or of its commercial formulate before the emulsifying thereof;
Cm = theoretical concentration of active oxygen in the emulsion.

The expression (I) is valid for those peroxides which have a relative density lower than 1. When this condition is not met, the samples have to be drawn from the bottom region of the cylinder, or the expression (I) should be modified, by placing Cs = 0. In order that this method of measurement of phase separation can be applied, it is furthermore necessary that the peroxide does not undergo any decomposition under the operating conditions -- which decomposition would consequently cause an inherent decrease in the content of active oxygen in the sample.

Calorimetric measurements carried out in a heat-flux calorimeter have shown that the thermal decomposition induced by an exogenous increase in temperature starts, under the measurement conditions, at the same temperature (i.e., approximately 50° C) in the case of the product as a pure compound and in the case of the aqueous emulsions thereof, whilst the specific enthalpy (J/g) is inversely proportional to the amount of water present in the emulsion. In other terms, the measurements confirm the expectations, i.e., they show that the presence of the emulsifier does not speed up the decomposition of the emulsified peroxide, while simultaneously confirming the stabilizing action of water.

In any case, a stable aqueous emulsion is obtained, which is endowed with a high safety degree and with a so high fluidity value, as to result to be easily pumpable. The use of such an emulsion is particularly advantageous, because in a computer-controlled facility it will facilitate the automation of precise metering steps and of the transfer of peroxide. Furthermore, the use of the emulsion facilitates the dispersion of peroxide in the polymerization medium, thus improving the performance thereof.

The following experimental examples are reported for the purpose of better illustrating the invention.

Example 1

60 g of demineralized water and 0.6 g of methyl-cellulose with a content of 27-32% of methoxy groups are charged to an open jacketed reaction vessel equipped with a bottom drain, stirring means and temperature measurement means. The mixture is kept stirred at the temperature of 40° C, until a complete

dispersion of methyl-cellulose is attained.

The temperature is then decreased down to about 5 °C and 40 grams of commercial tert.-butyl peroxy pivalate at 75% by weight in isodecane is added. The mass is then kept stirred 1 hour at the indicated temperature.

A milky emulsion is obtained which, after a 48-hour storage at the temperature of 5 °C still results to be completely emulsified, and 264 hours later results to have undergone phase separation to the extent of about 6%.

The viscosity of the emulsion is of 600 mPas.

Example 2

The process is carried out as in Example 1, using 70 g of demineralized water, 0.5 g of methyl-cellulose and 30 g of tert.-butyl peroxy pivalate at 75% by weight.

An emulsion is obtained which, after a 4-hour storage time at 5 °C is still completely emulsified, and 24 hours later results to have undergone phase separation to the extent of about 8%.

The viscosity of the emulsion is of 200 mPas.

Example 3

The process is carried out as in Example 2, with the exception that the mixture to be emulsified is stirred for a 15-minute time, rather than for 1 hour.

The so obtained emulsion shows a phase separation to the extent of about 3% after a 2-hour storage at the temperature of 5 °C.

## Claims

**1.** Process for preparing a stable aqueous emulsion of a liquid organic peroxide, characterized in that it comprises:
adding to water an amount comprised within the range of from 0.01 to 5% by weight, with reference to the weight of water, of a dispersant belonging to the class of cellulose ethers and cellulose esters and stirring the so obtained mass at a temperature comprised within the range of from 10 °C to 90 °C, until a homogeneous aqueous dispersion is obtained;
adding to said homogeneous aqueous dispersion an organic peroxide which is liquid under the operating conditions, and is insoluble or poorly soluble in water, with a weight ratio of the organic peroxide to the aqueous dispersion comprised within the range of from 1:9 to 9:1, and stirring the so obtained mass at a temperature comprised within the range of from 0 °C to 30 °C, until a stable aqueous emulsion of peroxide is obtained.

**2.** Process according to claim 1, characterized in that the organic peroxide is a perester and, preferably, tert.-butyl peroxy pivalate, either as a pure compound, or in the form of a solution in an inert oil-like vehicle.

**3.** Process according to claim 1, characterized in that the dispersant is selected from the group consisting of methyl-cellulose, ethyl-cellulose, carboxymethyl-cellulose and carboxyethyl-cellulose, and preferably is a methyl ether of cellulose in which from 10 to 50% of hydroxy groups are methoxylated, and having such a polymerization degreee that their aqueous solutions at 2% by weight have a viscosity value comprised within the range of from 10 to 6,000 mPas.

**4.** Process according to claim 1, characterized in that in the preparation of the homogeneous aqueous dispersion, the process is carried out with an amount of dispersant which is comprised within the range of from 0.1 to 1% by weight, at temperatures of the order of 40 °C.

**5.** Process according to claim 1, characterized in that in the preparation of the aqueous emulsion of the organic peroxide, the process is carried out at a temperature of the order of 5 °C , with a weight ratio of the organic peroxide to the aqueous dispersion comprised within the range of from 1:4 to 2:1, and with the process time being comprised within the range of from 10 minutes to 3 hours, and, preferably, of the order of 1 hour.

6. Aqueous emulsion of an organic peroxide obtained by means of the process according to claims from 1 to 5.

7. Aqueous emulsion according to claim 6 , characterized in that the organic peroxide is tert.-butyl peroxy pivalate.

8. Use of the aqueous emulsion according to claim 7 in the processes of polymerization of vinyl chloride, carried out in aqueous polymerization suspension or emulsion.